# EUROPEAN PATENT APPLICATION

(11) **EP 3 747 317 A1**
(43) Date of publication of application: **09.12.2020**
(21) Application number: 19197393.2
(22) Date of filing: 13.09.2019
(51) Int. Cl.: A47G 29/14, A47G 29/20, H04W 12/00, H04W 4/029, H04W 4/80

(54) **A PACKAGE LOCKING APPARATUS AND A SYSTEM THEREFOR**

(30) Priority: 07.06.2019 GB 201908138; 25.06.2019 GB 201909113
(71) Applicant: Botosoft Technologies Ltd, London EC4N 6HL (GB)
(72) Inventor: Agbeyo, Tolulope, London, EC4N 6HL (GB)
(74) Representative: Fry, David John

(57) **Abstract**

A parcel securement apparatus and system including a security net in which the parcel is securely retained during use. The net is secured in an unopened state by a security device including a GSM module, a Bluetooth module, and an RFID module designed to receive access requests from an NFC smartcard/mobile application/web application. A smartcard is configured to send a signal to the device to allow the net to be opened. Data from the device is transmitted to an internet portal to provide access to data concerning the securement of parcel during its transit.

## Description

### FIELD OF THE INVENTION

The present invention relates to a package locking system. More especially the invention relates to a locking system for a parcel or package that includes a physical tamper-proof or tamper-evident wrapping that can be unlocked electronically only by authorized personnel. The invention also relates to a method for detecting unauthorized attempt to access to the parcel

### BACKGROUND OF THE INVENTION

In today's world, the protection of personal property is a major concern and there has been a significant growth in security market with a wide range of security solutions available from elaborate software security to protect data within banking institutions, to audible alarm systems and immobilizer systems for vehicles.

Similarly, the protection of confidential or commercially sensitive documents is a growing concern and requires increasingly complex security measures to maintain higher levels of access control.

The theft of examination materials prior to commencement of examinations is a serious issue and is the subject of ever increasing cases of malpractice in courts across the world.

On many occasions, the theft of such materials has been found to occur during the transportation of the examination papers to the examination destination. In such circumstances, the internet allows the contents of the papers to be exposed to any number of potential candidates rapidly prior to the examination taking place. Not only does this put some candidates at an unfair advantage, it also causes large skews in results. Such skews caused by undetected illegal means may impact on how subjects are taught for future generations. Consequently theft of examination materials is a major threat to the integrity of examination processes as to future education as a whole.

Moreover, such malpractice has often been alleged and, in some cases, proven in local and national elections across the world where voting papers have "gone missing".

Furthermore, it is estimate that billions of dollars are lost through the theft of courier parcels. Confidential items and sensitive items are increasingly being stolen, or going missing, whilst on transit from the sender to the receiver.

This is an ongoing need to provide more sophisticated "smarter" means of securing, tracking and monitoring packages.

By packages, it is meant any item that is sent to another party which is small enough to be posted our couriered and needs to be secured. It includes, for example without limitation, important items wrapped in a parcel, confidential and/or sensitive documents such as examination papers or election papers, or personal documents such as passports, bank cards or birth certificates that may be sent through the postal system or couriered to their destination.

The present invention seeks to provide a package security system which prevents access to the package by any unauthorized party. The security system would prevent, for example, the package being opened in the event the package is stolen. It would also prevent the package being opened if the package is correctly delivered but not yet in the possession of the intended recipient.

The invention also seeks to provide an anti-theft electronic parcel monitoring system to allow the parcel to be tracked during transit to provide a warning within the system in the event that the parcel is being tampered with prior to reaching the intended recipient.

### STATEMENTS OF INVENTION

According to a first aspect of the invention there is provided parcel securement apparatus comprising a security net in which the parcel is securely retained during use; the security net being secured in an unopened state by a security device including a GSM module, a Bluetooth module, and an RFID module designed to receive access requests from an NFC smartcard/mobile application/web application; a smartcard configured to send a signal to the device to allow the net to be opened.

Preferably, the security net is constructed from a metal mesh.

Preferably the security net is made from copper. Alternatively the security net is made from aluminum.

Preferably the opening of the security net extends to threads wound around a spool within the device.

Preferably the device includes a sprung arm configured to prevent rotation of the spool when the device is locked.

Preferably the arm is movable to an unlocking position, whereby the spool is able to rotate within the device, upon an activation signal received by the device from the smart card.

In a second aspect there is provided a parcel monitoring system comprising the apparatus of the first aspect and including an internet portal to provide access to data transmitted from the device, concerning the securement of parcel during its transit.

Preferably the parcel monitoring system comprises means to provide an alarm within the system if an attempt to unlock the device is made without the smart card.

Preferably the system includes means to remotely unlock or lock the device, said means only being available to authorized personnel.

Preferably the device includes a memory to store data concerning its location, or unlocking and to transmit said data to the portal when internet access is available.

### BRIEF DESCRIPTION OF THE DRAWINGS

One embodiment of the present invention will now be described by way of example only and with reference to the accompanying figures in which:
Figure 1 is an exploded view 1 of a security device constructed in accordance with the invention;
Figure 2 is a further exploded view of the device of figure 1 showing the construction of the components;
Figure 3 is a perspective view of the assembled device of figures 1 and 2;
Figure 4 illustrates how the package is placed within the security apparatus;
Figure 5 illustrates how the security apparatus is closed once the package has been inserted;
Figure 6 illustrates how the monitoring device is secured to the assembly;
Figure 7 illustrates how the apparatus is closed with the device locked;
Figure 8 illustrates how the device is unlocked;
Figure 9 illustrates how the device is opened after being unlocked;
Figure 10 illustrates how security apparatus of the system is opened after unlocking the device;
Figure 11 illustrates how the assembly is opened to access the package once it has been successfully delivered;
Figure 12 is a schematic illustration of a smart cards of the system;
Figure 13 illustrates the web portal of the security monitoring system; and
Figure 14 illustrates the mobile application for the security monitoring system.

### DETAILED DESCRIPTION OF PREFERRED EMBODIMENTS

The present invention provides a package security system which includes physical security apparatus in which a package is located while in transit, electronic means to lock and unlock the apparatus and a web-based portal to track and monitor the package during transit.

The apparatus broadly comprises a security net 2 and a security device 4 which is connected to the net 2 during use.

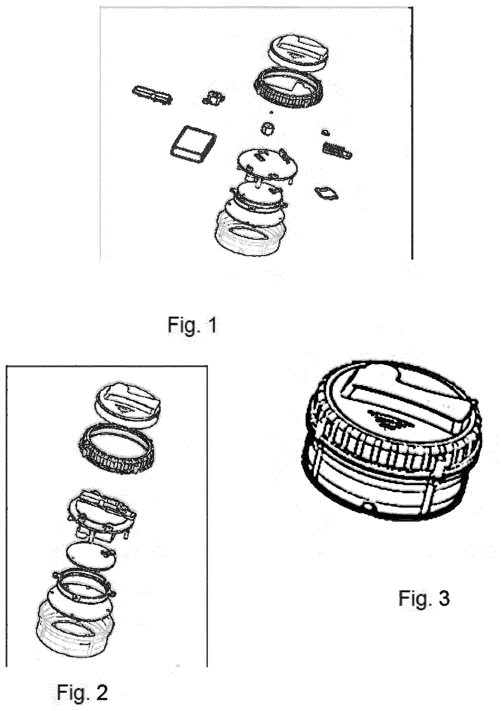

The device 4 is shown in figures 1 to 3. The device comprises a generally cylindrical body 6 in which is housed a GSM module, a blue tooth module and an RFIS module ("electrical components"). The body 6 is made from a plastics material but could be of any other suitable lightweight, strong, robust and generally weather proof material.

As can be seen in figures 1 and 2, the device is constructed from a number of cylindrical or circular or structural components connected together in a compact way. The structural components hold the electronic components within the device 4, as well as other features of the device 4 that will be explained below.

One structural component of the device provides a securement ring 8. The securement ring 8 includes a screw thread around the lower periphery of its inside surface.

The top of the main body 6 has a lip 10 the outer surface of which has a complimentary screw thread.

When assembled the securement ring 8 is placed over all the components of the device 4 and is screwed onto the main body 6 to form a complete compact structure, as can be seen in figure 3.

Additional securement means may be provided once the securement ring 8 is screwed onto the body 6 to prevent unauthorized unscrewing of the components. An unlocking tool may be required to allow unscrewing for disassembly of device for maintenance, said tool only being available to authorized personnel. Alternatively, the securement ring 8 may be permanently secured to the body 6 once they are attached.

Another structural component of the device 4 comprises an end cap 12, the end face of which forms the exposed top surface of the device 4 when the cap 12 is held securely in place by the securement ring 8 being connected to the main body 6.

The end cap 12 is held within the device structure in such a way as to be rotatable about the lateral plane of the device 4. To this end the outer exposed face of the cap 12 includes a protrusion forming a conveniently shaped finger grip 14 to allow the user to manually rotate the cap 12 when the device 4 is unlocked, as will be described later.

A further structural component comprises a ring-shaped frame 16 carrying a sprung arm 18. The arm 18, in use, provides the mechanical locking and unlocking mechanism for the device 4.

When locked the sprung arm 18 remains within the housing of the device 4 and is not accessible from the outside to prevent unauthorized from tampering with the device in an attempt to unlock it. Also, while in a locked position, the orientation of the arm prevents rotation of the cap 12.

Unlocking of the device 4 is carried out electronically. A smart card 20 must be used to transmit an authorized electronic signal to the electronic components within the device 4. When a signal is received, the orientation of the arm 18 is changed to an unlocked position whereby the cap 12 is then able to be manually rotated by the user.

A further structural component of the device 4 comprises a circular plate 20 on which a charging port 22 is arranged, to allow charging of the electrical components when necessary.

The application of the security system and its apparatus will now be described with reference to the remaining figures.

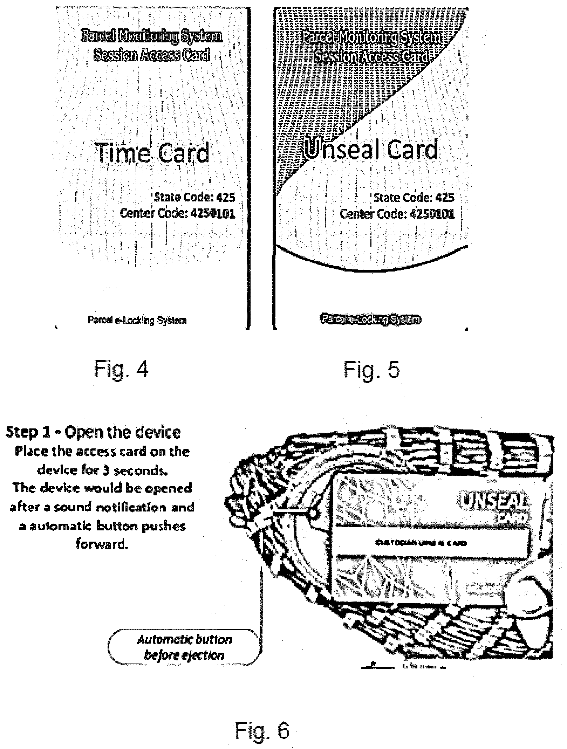

The security apparatus includes a security net or mesh 2 in the form of a bag or bag-like structure. The mesh is made from a conductive metal such as copper or aluminum. It could be though made from other materials which are strong and difficult to tear or cut open. The opening of the net 2 extends to metallic threads 24 that, when pulled act as a "drawstring" to close the opening once the package or parcel 26 has been placed inside (see figures 4 and 5).

The threads 24 are formed in a loop formation and extend through a side aperture into the device 4 where the loop extends around a spool frame rotatable by the cap 12. The spool may be integral with the cap 12 so that the threaded loop 24 extends around the periphery of the side surface of the cap 12. Alternatively the spool may be a separate component within the device 4 and is connected to the cap 12 so that rotation of the cap 12 causes rotation of the spool. Similarly, when rotation of the cap 12 is prevented by the sprung arm 18 being in its locked position, rotation of the cap 12 is also prevented.

As can be seen in the figures the threads 24 of the loop cross prior to extending around the spool. Rotation of the cap 12, for example clockwise, will cause each side of the looped thread 24 to be pulled towards each other to tighten and close of the opening of net 2.

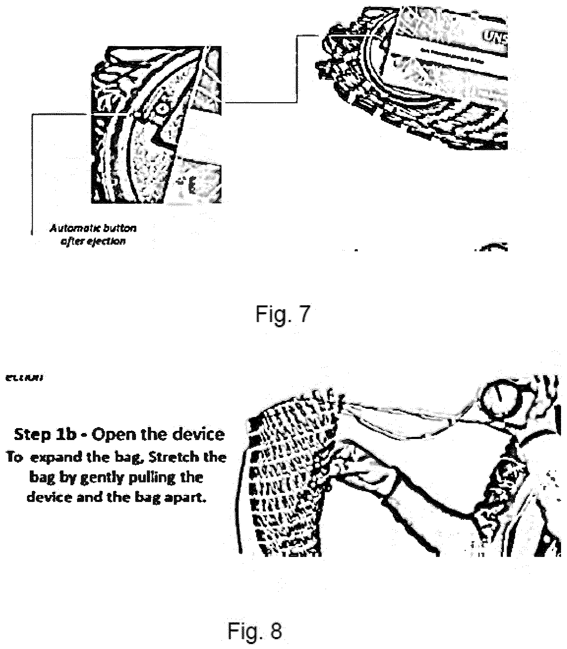

As can be seen in figures 6 and 7, the net 2 is fully closed around the parcel 26 when the cap 12 is rotated to pull the threads 24 into the device 4 and around the spool. To allow the cap 12 to rotate the sprung arm 18 extends outwardly from the device 4 and is disengaged from the cap 12. The protrusion of the arm 18 from the device 4 provides a locking button accessible to the user.

The device 4 is locked in position at the entrance to the closed net 2 by the user manually depressing the locking button to push the arm 18 back into the device 4 such that it engages with the cap 12 to prevent further rotation in either direction.

The electronic components within the device may include means to provide an audible signal to the user when the button is depressed for sufficient time for the arm 18 to retract into the device 4 and lock the cap 12. In this way the user knows when the device 4 is locked and fully secure.

Figure 6 shows the parcel securing system in its fully locked and secure state. Here the net 2 is fully wrapped around the parcel 26 and the opening of the parcel 26 is not accessible.

As can be seen in figure 7, unlocking of the system is triggered by using a smart card 20. The smart card 20 activates the unlocking system by tapping the card on the exposed face of the cap 14 which send a signal to the electronic components.

The smart card 20 is a contactless (RFID or NFC) card and may be configured to lock as well as unlock the device.

The electronic components within the device 4 include means to trigger an audible and/or visual alarm signal in the event that a user attempts to open the net 2 or unlock the device 4 without a valid authorized smart card 20. The components also include a memory and storage means to record all instances of attempted tampering. Data concerning the attempts is transmitted via wifi to a web server to be accessed through a web portal or mobile app. If internet access is not available, the data will is held for transmission as soon as an internet connection can be established.

Under some circumstances the device 4 may be locked or unlocked remotely by authorized personnel able to access the web monitoring system through the device's RFID/GPS/GSM enabled technology.

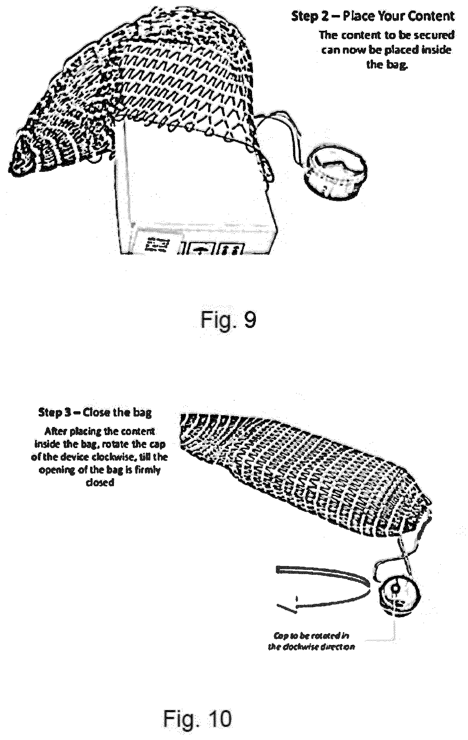

Figures 9 and 10 illustrate the unlocking procedure of the device 4. The smart card 20 is placed over the exposed surface of the cap 12 to send a signal to the electrical components within the device 4 to eject the arm 18 from the device housing. The system may include a delay in the signal. For example, the card 20 may need to be held in place for three seconds to activate the arm 18 to avoid unintentional unlocking of the device. Activation may be unaccompanied by an audible signal.

Once the arm 18 is ejected, the cap 12 and hence the spool are able to rotate within the housing of the device 4. Anticlockwise rotation of the cap 12 caused by gently pulling the device 4 away from the net 2 allows opening of the entrance of the net 2 to access the parcel 26.

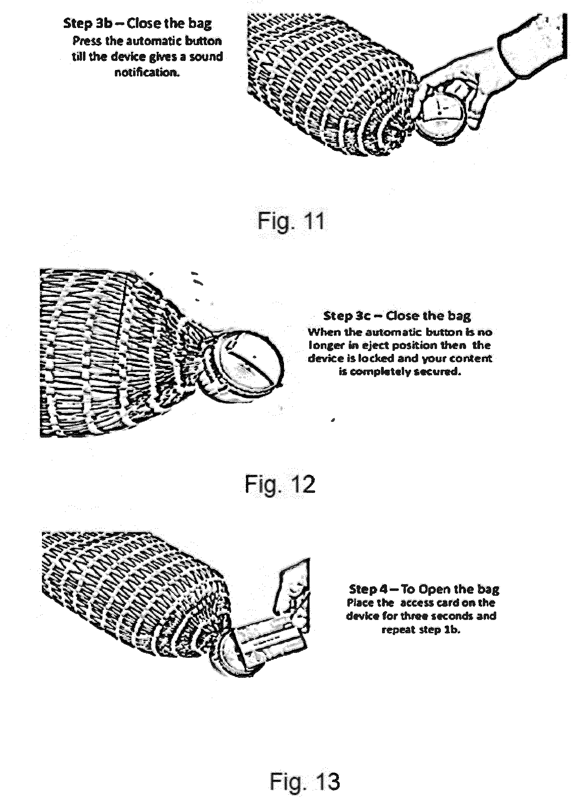

Figure 12 illustrates a smart card 20 used to inlock the device 4. The figure also illustrates a second smart card 28 used to configure the device 4 for time of access. In this regard, the monitoring system may remotely, or using the card 28, place a time restriction on when the device 4 may be opened to allow for its transit to the required destination.

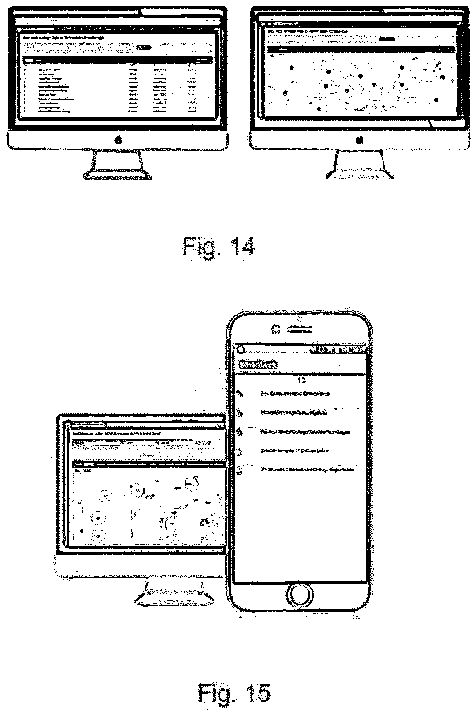

Figures 13 and 14 illustrate the monitoring and reporting portal for web or mobile application. The portal may be used with android, iOS, Windows and other java-based devices. The portal will provides access to all or selected data fed from the device 4 including, without limitation, the date and time of locking and unlocking of the device 4, identification of the smart card 20 used for unlocking (or locking), the geographical location of the locking or unlocking and geographical tracking of the device during or after transit. It will also provide all data concerning unsuccessful attempts to unlock the device.

## Claims

1. Parcel securement apparatus comprising:
a security net in which the parcel is securely retained during use;
the security net being secured in an unopened state by a security device including a GSM module, a Bluetooth module, and an RFID module designed to receive access requests from an NFC smartcard/mobile application/web application;
a smartcard configured to send a signal to the device to allow the net to be opened.

2. Parcel securement apparatus according to claim 1, wherein the security net is constructed from a metal mesh.

3. Parcel securement apparatus according to claim 2, wherein the security net is made from copper.

4. Parcel securement apparatus according to claim 2, wherein the security net is made from aluminum.

5. Parcel securement apparatus according to any one of claims 1 to 4, wherein the opening of the security net extends to threads wound around a spool within the device.

6. Parcel securement apparatus according to claim 5, wherein the device includes a sprung arm configured to prevent rotation of the spool when the device is locked.

7. Parcel securement apparatus according to 5, wherein the arm is movable to an unlocking position, whereby the spool is able to rotate within the device, upon an activation signal received by the device from the smart card.

8. A parcel monitoring system comprising the apparatus of any one of claims 1 to 7 and further comprising an internet portal to provide access to data transmitted from the device, concerning the securement of parcel during its transit.

9. A parcel monitoring system according to claim 8, further comprising means to provide an alarm within the system if an attempt to unlock the device is made without the smart card.

10. A parcel monitoring system according claim 8 or claim 9, including means to remotely unlock or lock the device, said means only being available to authorized personnel.

11. A parcel monitoring system according to any one of claims 8 to 10, wherein the device includes a memory to store data concerning its location, or unlocking and to transmit said data to the portal when internet access is available.
